Europäisches Patentamt

European Patent Office

Office européen des brevets

(19)

(11) **EP 1 022 632 A1**

(12) ## EUROPEAN PATENT APPLICATION

(43) Date of publication:
26.07.2000 Bulletin 2000/30

(51) Int Cl.$^7$: **G05B 23/02**

(21) Application number: 99200157.8

(22) Date of filing: 21.01.1999

(84) Designated Contracting States:
**AT BE CH CY DE DK ES FI FR GB GR IE IT LI LU MC NL PT SE**
Designated Extension States:
**AL LT LV MK RO SI**

(71) Applicant: **ABB Research Ltd.**
**8050 Zürich (CH)**

(72) Inventor: **Franchi, Claudio**
**21047 Saronno (VA) (IT)**

(74) Representative: **Giavarini, Francesco**
**ABB Ricerca S.p.A.**
**Viale Edison, 50**
**20099 Sesto San Giovanni (MI) (IT)**

(54) **Monitoring diagnostic apparatus with neural network modelling the normal or abnormal functionality of an electrical device**

(57)    The present invention relates to a monitoring diagnostic apparatus for detecting the normal or abnormal functionality of electrical devices (3) such as circuit breakers, switches, disconnecting switches, oil-insulated electrical equipment, vacuum-insulated electrical equipment, air-insulated electrical equipment, solid insulated electrical equipment, through the use of a neural network (14) to model the normal or abnormal functionality of the electrical device (3) and to identify the cause of said abnormal functionality, if present.

Figure 2

EP 1 022 632 A1

## EP 1 022 632 A1

**Description**

The present invention relates to a monitoring diagnostic apparatus for detecting the normal or abnormal functionality of electrical devices such as circuit breakers, switches, disconnecting switches, oil-insulated electrical equipment, vacuum-insulated electrical equipment, air-insulated electrical equipment, solid insulated electrical equipment. Particularly, the present invention relates to a monitoring diagnostic apparatus which allows to detect the main causes of failures of an electrical device through the use of a neural network to model the normal or abnormal functionality of the electrical device and to identify the cause of said abnormal functionality, if present.

The use of monitoring diagnostic apparatuses for detecting faults in electrical devices such as circuit breakers, switches, etc. is known in the state of the art. The conventional monitoring apparatuses use a large amount of different sensing devices for fault monitoring. Such sensing devices are connected to means for making a comparison between the signals output by said sensors and predefined threshold values. Due to their intrinsic structure, the conventional monitoring diagnostic apparatuses allow to detect the presence of an abnormal functionality of the device (for example when the intensity of the output signal is greater or smaller than the threshold value) but do not provide any aid to identify the cause of said abnormal functionality. In addition, the conventional monitoring diagnostic apparatuses cannot adapt themselves to changes of the monitored device conditions depending, for example, on changes of the type of istallation.

The use of several sensors is not always possible and, however, implies high costs of installation of the monitoring diagnostic apparatus.

In order to solve these problems, expecially those concerning the identification of the cause of the abnormal functionality of the electrical device, monitoring diagnostic apparatuses, based on the use of neural networks, have been proposed in the state of the art.

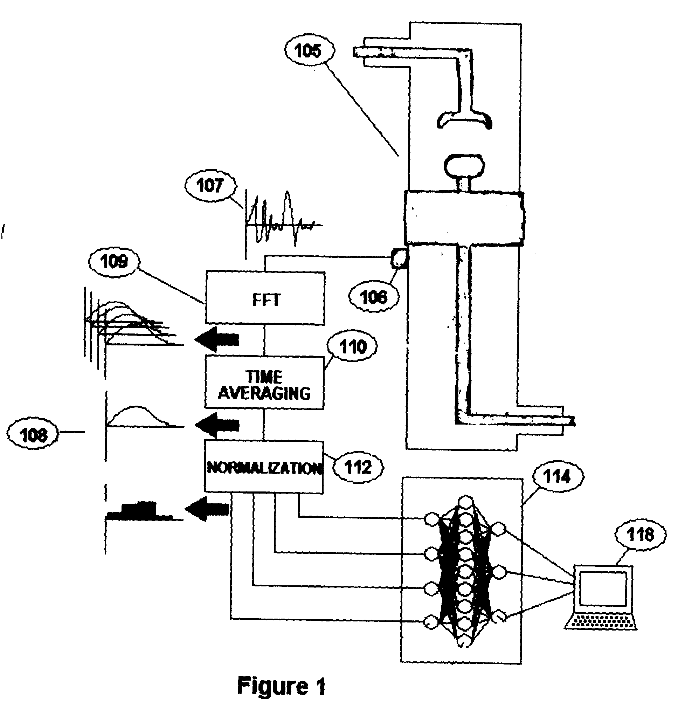

With reference to figure 1, it is shown a schematic representation of a neural network based monitoring diagnostic apparatus of the state of the art, as proposed in the US patent N" 5,419,197.

A vibration sensor 106 is positioned outside the tank 105 of a circuit breaker for measuring an acceleration due to vibrations transmitted to the tank 105 by pressure waves originated by partial discharges inside the tank. The sensor 106 provides a signal 107, proportional to accelleration, to a signal processing means 108 which processes said signal 107 and provides an input to a neural network 114. Signal processing means 108 performs some processing steps which consist in a Fast Fourier Transform 109 of the signal, an operation of averaging 110 in the domain of frequency and an operation of normalization 113 in order to obtain a collection of values to put into the neural network. The neural network provides output data to a diagnostic display 118.

The apparatus illustrated in figure 1 is provided for the detection of the presence of partial discharges inside the tank 105. The presence of partial discharges generates pressure waves which induce the tank 105 to vibrate. It is known that partial discharges represent a cause of abnormal functionality of the electrical device in a little number of cases. More often, abnormal functionality is due to failures related to the driving mechanism of the electrical device. Such failures cannot be detected by the apparatuses illustrated in figure 1 due to the location of the accelleration sensor that, being placed outside the tank, cannot detect the vibrations generated by failing parts of the driving mechanism.

Moreover the signal processing means, considered by the monitoring diagnostic apparatuses of the state of the art, utilize very complicated alghoritms that require a large amount of computations and therefore expensive processing modules are needed. For example, referring to the apparatus described in figure 1, performing a Fast Fourier Transform, implies the use of algorithms whose complexity is proportional to the square of the amount of input data.

As a result, the use of the neural network based monitoring diagnostic apparatuses known of the state of the art is quite difficult and expensive. Morevover it does not fulfill the needs required for performing effective service operations on the monitored electrical devices.

Main aim of the present invention is to provide a monitoring diagnostic apparatus which allows to detect and identify the main causes of abnormal functionality of an electrical devices such a circuit breakers, switches, disconnecting switches, oil-insulated electrical equipment, vacuum-isulated electrical equipment, air-insulated electrical equipment, solid insulated electrical equipment.

Within this aim, an other object of the present invention is to provide a monitoring diagnostic apparatus which allows to characterize the operation of the driving mechanism of electrical devices.

Further object of the present invention is to provide a monitoring diagnostic apparatus which uses a neural network to identify causes of abnormal functionality.

An other object of the present invention is to provide a monitoring diagnostic apparatus which uses a relatively low number of sensing devices.

An other objetct of the present invention is to provide a monitoring diagnostic apparatus which uses simple alghoritms for processing the signals output by such sensors.

Further but not last object of the present invention is to provide a monitoring diagnostic apparatus which is highly reliable, relatively easy to perform at competitive costs. This aim, these objects and others which will become apparent hereinafter are achieved by a monitoring diagnostic apparatus for detecting the normal or abnormal functionality of a driving mechanism of an electrical device comprising:

- a sensor for measuring a quantity characterizing the operation of said driving mechanism and for outputting a signal representing said quantity;
- a signal processing means for executing predetermined signal processing on said signal;
- a neural network to model normal and predefined abnormal functionality of said driving mechanism and to identify the cause of said abnormal functionality thereof, by inputting a collection of values resulting from said signal processing.

The apparatus, as in the present invention, is characterized by the fact that:

a) said sensor is positioned aboard the driving mechanism of said electrical device;
b) said predetermined signal processing comprises at least the following steps:

- sampling said signal output by said sensor and calculating a time window comprising a predefined number of values sampled from said signal;
- defining a shift value for obtaining a sequence of time windows along the time domain of said signal;
- calculating at least a collection of values, each value being obtained by a windowed average of the sampled values belonging to each time window obtained along the time domain of said signal;
- inputting said collection of values into said neural network.

Further characteristics and advantages will become apparent from the following detailed description of preferred but not exclusive embodiments of the monitoring diagnostic apparatus according to the invention, illustrated only by way of non-limitative example in the accompanying drawings, wherein:

figure 1 represents a schematic view of a monitoring diagnostic apparatus of the state of the art;
figure 2 represents a schematic view of the monitoring diagnostic apparatus as in the present invention;
figure 3 represents a schematic view of the elaboration steps implemented by a processing means comprised in the monitoring diagnostic apparatus as in the present invention;
figure 4 represents a schematic view of the calculations performed by elaboraton steps illustrated figure 3;
figure 5 represents a schematic view of the neural network comprised in the monitoring diagnostic apparatus as in the present invention;

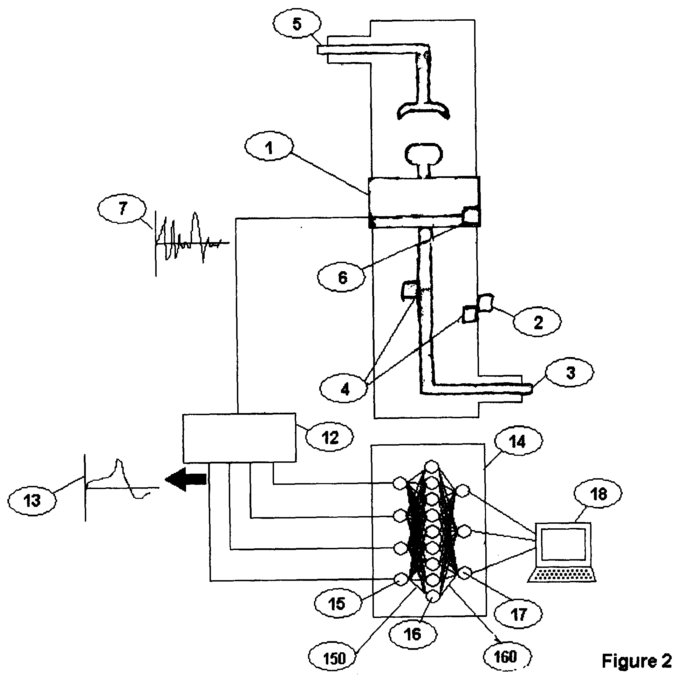

Referring to figure 2, a schematic view of the monitoring diagnostic apparatus as in the present invention is shown. A sensor 6 is placed inside the tank 5 of the electrical device 3, for example a high or medium voltage circuit breaker, for detecting a quantity characterizing the behaviour of the driving mechanism 1 of the electrical device 3. In particular the vibrations of the movable parts of the driving mechanism can be monitored, if the sensor 6 is placed aboard the driving mechanism 1.According to preferred embodiments of the present invention the sensor 6 can be an acceleration sensor. The placement of the sensor 6 is particularly advantageous because it allows to identify the main causes of failure of the electrical device 3. Obviously, if more diagnostics is required, it possible to place one or more sensors (indicated by reference numbers 2 and 4 in figure 1) inside or outside the tank in order to detect other possible secondary causes of fault of the electrical device, such as partial discharges. The sensor 6 provides a signal 7 representing the detected quantity. The signal 7 is put into signal processing means 12 which elaborates the signal 7 and outputs a collection of values 13 to put into a neural network 14. The neural network 14 outputs signals of normal or abnormal functionality of the driving mechanism 1 to a diagnostic display 18, indicating the type of fault, if present.

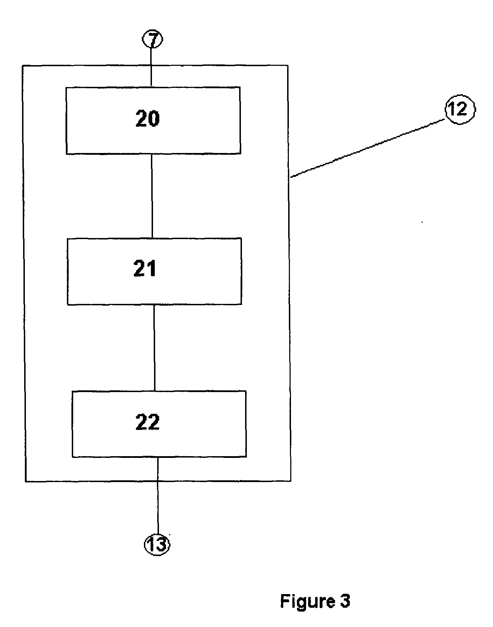

Referring to figure 3, the steps implemented by signal processing means 12 are presented. At step 20 a sampling of the signal 7 is performed and a time window, comprising a predefined number of values sampled from the signal 7, is calculated. At step 21 a shift value is calculated. This shift value is necessary for obtaining, for example through a simple product, a sequence of time windows covering the time domain of the signal 7. At step 22, for each window along the time domain of signal 7, a windowed average is calculated. This implies that the average of the values comprised in each window is calculated obtaining a collection of values 13 to put into the neural network 14. As it will be illustrated hereinafter, this calculation can be performed in different ways. In any case, the elaborations performed in step 22 are particularly advantageous because they allow to reduce hugely the magnitude of the amount of data to put into the neural network for the classification of the faults detected. Referring again to figure 2, in a preferred embodiment, the neural network 14 is divided in an input layer 15, an hidden layer 16 and an output layer 17. Each layer contains a plurality of neural elements. Advantageously, the input layer contains a neural element for every value of the collection 13. Each element of the input layer 15 is connected to each element of the hidden layer by a first type of connectivity weights 150, while each element of the hidden layer 16 is connected to each element of the output layer 17 through a second type of connectivity weights 160. The output level 17 of the neural network provides logical values able to activate the proper messages for the diagnostic display 18. The calculation of such connectivity weights 150 and 160 is illustrated herebelow.

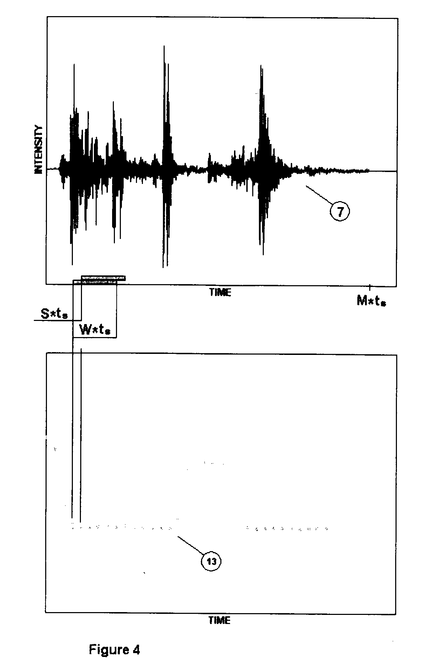

In figure 4 a schematic representation of the calculations performed by processing steps of figure 3 is presented. With the reference number 30 a possible temporal diagram for the signal 7 is presented. The signal 7 is then sampled at step 20 in figure 3 and the sampling period is indicated in figure 4 as Ts. The sampling period is predefined since the time domain of the signal 7 can be expressed as (M xTs), M being a predefined number. The extension of a time window is thus given by (W xTs), where W is a predefined number of sampled values to be contained. The shift value necessary to create a sequence of time windows along the time domain of signal 7 is given by (S xTs), where S is a predefined number. The windowed average for each window can be performed in different ways. In a preferred embodiment, being $d_i$ the $i^{th}$ sampled value contained in a generic $k^{th}$ window (W•Ts) of the time domain (k=1, M), the windowed average, related to said $k^{th}$ window, is given by the equation

$$p_k = \frac{\sum_{i=1}^{W} d^2{}_{(kS+i)}}{W} \qquad (1).$$

The collection of values $p_k$ is the collection 13 described in figure 3. Alternatively, two collections of values for inputting the neural network can be provided. One collection is referred to positive sampled values while the other one is referred to negative sampled values. The two collections can be given by the following equations (2) and (3):

$$p^-{}_k = \frac{\sum_{i=1}^{W} d_{(kS+i)}}{W}\left(d_i \leq 0\right) \quad (yy) \quad \text{and} \quad p^+{}_k = \frac{\sum_{i=1}^{W} d_{(kS+i)}}{W}\left(d_i \geq 0\right) \quad (zz).$$

The calculation of the collection of the input values 13 can in practise be perfomed by a simple iterative software loop. This is particularly advantageous because it allows to mantain linear the cardinality order of the alghoritm. This fact means that very simple processing resources are required.

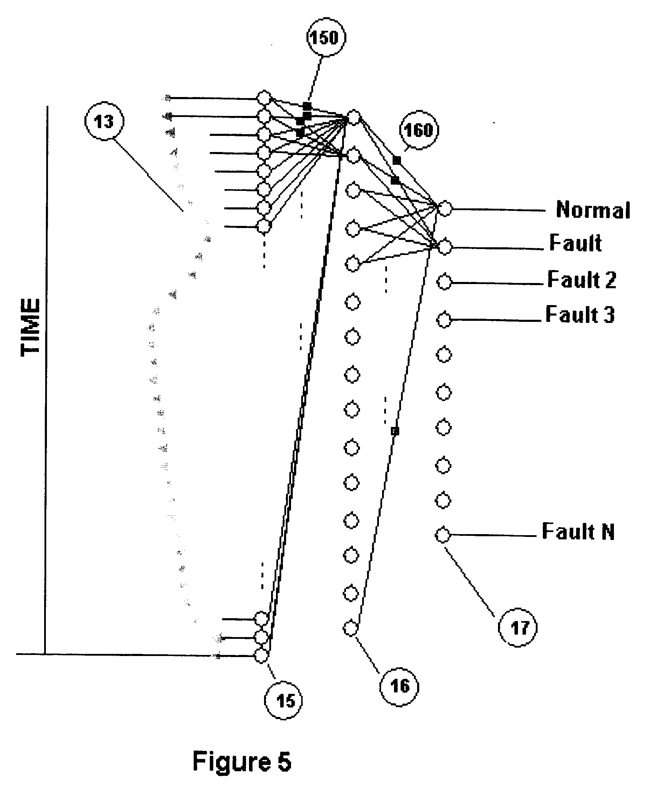

In figure 5 a schematic view of the neural network is presented. In a preferred embodiment all the elaborations are supposed to happen at the hidden level 16. The input layer 15 has many neural elements as the number of values provided by the collection 13 of figure 2. All the neural elements of the input layer 15 are linked to the neural elements of the hidden layer 16 through the connectivity weights 150 while all the elements of the hidden layer 16 are connected to the neural elements of the output layer 17 through the connectivity weights 160. Each neural element of the output layer is associated to a type of fault or to the normal functioning condition. The message relative to a particular type of fault is actived when the associated real value assumes a suitable level.

Initially the neural network is submitted to a learning process which mainly consists in the evaluation of the connecitvity weights 150 and 160 of figure 2. During the normal working of the monitoring diagnostic apparatus, the $h^{th}$ signal outputted by an element of the hidden layer is given by the following equation (4):

$$V_h = \sum_{i=1}^{N} W_{hi} V_i \quad (4)$$

where N is the number of neural elements of the input layer, H is the number of neural elements of the hidden layer. The signal put into the $o^{th}$ neural element of the output layer is given by the following equation (5):

$$V_o = \sum_{h=1}^{H} W_{ho} V_h \quad (5)$$

where O is the number of neural elements of the output layer, H is the number of neural elements of the hidden layer.

The signal Vo is a digital signal. In a preferred embodiment the connectivity weights 150 are a sigmoid function depending on the input values from the collection 13, while the connectivity weights 160 are costant values.

The learning process comprises the following steps:

- some "a priori" ouput values corresponding to known fault situations are defined;
- some input signals corresponding to known fault situations are provided;
- the error generated by the difference between the "a priori" output values and the output values provided by equations (4) and (5) is minimized;
- the correct connectivity weights are calculated as a result of this minimization.

The calculation can be realized by known procedures: for example a Maximum Gradient Descent Procedure (MGDP) can be easily used.

The monitoring diagnostic apparatus as in the present invention has shown to fulfill all the above mentioned aim. Infact, it has been demonstred in practive that the placement of the sensor inside the tank of the electrical device allows advantageosly to identify the most important fault conditions. This gives huge advantages when service operations has to be performed. Moreover the simple structure of the signal processing means allows to obtain relatively low cost for the installation and the operation of the monitoring diagnostic apparatus.

In addition the use of a neural network can easily allow to identify the abnormal or normal functionality of the electrical device.

Moreover, the apparatus as in the present invention can be easily adapted to different installation types thanks to simply training the network using different "a priori" values.

In the above mentioned example a circuit breaker has been taken as example of electrical device. However objects of the embodiments are not limited to a circuit breaker but can also be applied to other electrical equipment such as switches, disconnecting switches, oil-insulated electrical equipment, vacuum-isulated electrical equipment, air-insulated electrical equipment, solid insulated electrical equipment.

## Claims

1.  Monitoring diagnostic apparatus for monitoring the normal or abnormal functionality of a driving mechanism of an electrical device comprising:

    - a sensor for measuring a quantity characterizing the operation of said driving mechanism and for outputting a signal representing said quantity;
    - a signal processing means for executing predetermined signal processing on said signal;
    - a neural network to model normal and predefined abnormal functionality of said driving mechanism and to identify the cause of said abnormal functionality thereof, by inputting a signal resulting from said signal processing;

    characterized by the fact that:

    a) said sensor is positioned aboard the driving mechanism of said electrical device;
    b) said predetermined signal processing comprises at least the following steps:

    - sampling said signal and calculating a time window comprising a predefined number of values sampled from said signal ;
    - defining a shift value for obtaining a succession of time windows along the time domain of said signal;
    - calculating at least a collection of values, each value being obtained by a windowed average of the sampled values belonging to each time window obtained along the time domain of said signal;
    - putting said collection of values into said neural network.

**2.** The monitoring diagnostic apparatus as in claim 1 characterized by the fact that said sensor measures an acceleration resulting from vibrations occurring in said driving mechanism.

**3.** The monitoring diagnostic apparatus as in one or more of the previous claims characterized by the fact that said predetermined signal processing processing calculate two collections of values obtained by operating a windowed average on positive and negative sampled values comprised in each window of said succession of time windows.

**4.** The monitoring diagnostic apparatus as in one or more of the claims from 1 to 3 characterized by the fact that said predetermined signal processing processing calculate one collections of values obtained by operating a windowed average on the square of sampled values comprised in each window of said succession of time windows.

**5.** The monitoring diagnostic apparatus as in one or more of the previous claims characterized by the fact that said neural network comprises different levels;

**6.** The monitoring diagnostic apparatus as in claim 6 characterized by the fact that said neural network comprises an input layer, an hidden layer and an output layer.

**7.** The monitoring diagnostic apparatus as in claim 7 characterized by the fact that each element of said input layer is connected with each element of the hidden layer through a first type of connectivity weights.

**8.** The monitoring diagnostic apparatus as in claim 8 characterized by the fact that said first type of connectivity weights comprises sigmoid functions depending of the values put into said neural network.

**9.** The monitoring diagnostic apparatus as in claim 7 characterized by the fact that each element of said hidden layer is connected with each element of the output layer through a second type connectivity weights.

**10.** The monitoring diagnostic apparatus as in claim 10 characterized by the fact that said second type of connectivity weights comprises costant values.

**11.** The monitoring diagnostic apparatus as in one or more of the claims from 6 to 11 characterized by the fact that said neural network is submitted to a training process which consists in the following steps:

- defining some "a priori" ouput values corresponding to known fault situations;
- providing to said neural network some input signals corresponding to the same known fault situations for which said "a priori" output values have been calculated;
- minimizing the error generated by the difference between the "a priori" output values and the output values generated by said input signals;
- calculating the correct connectivity weights.

**12.** The monitoring diagnostic apparatus as in one or more of the previous claims characterized by the fact that it comprised one or more sensors for measuring quantities resulting from other causes of failing of said electrical device.

**13.** Electrical switchgear comprising a monitoring diagnostic apparatus as in one or more of the previous claims.

EP 1 022 632 A1

Figure 1

7

Figure 2

Figure 3

Figure 4

Figure 5

European Patent
Office

**EUROPEAN SEARCH REPORT**

Application Number

EP 99 20 0157

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | US 5 419 197 A (IZUI YOSHIO ET AL) 30 May 1995 * column 3, line 58 - column 4, line 57 * | 1-13 | G05B23/02 |
| A | US 5 566 092 A (WANG HSU-PIN ET AL) 15 October 1996 * column 3, line 30 - line 34 * | 1-13 | |
| | | | TECHNICAL FIELDS SEARCHED (Int.Cl.6) |
| | | | G05B |

The present search report has been drawn up for all claims

| Place of search | Date of completion of the search | Examiner |
|---|---|---|
| MUNICH | 17 June 1999 | Messelken, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 022 632 A1

**ANNEX TO THE EUROPEAN SEARCH REPORT
ON EUROPEAN PATENT APPLICATION NO.**          EP 99 20 0157

17-06-1999

| Patent document cited in search report | | Publication date | Patent family member(s) | | Publication date |
|---|---|---|---|---|---|
| US 5419197 | A | 30-05-1995 | JP | 5333079 A | 17-12-1993 |
| | | | DE | 69315623 D | 22-01-1998 |
| | | | DE | 69315623 T | 07-05-1998 |
| | | | EP | 0572767 A | 08-12-1993 |
| US 5566092 | A | 15-10-1996 | DE | 4447288 A | 06-07-1995 |
| | | | FR | 2714750 A | 07-07-1995 |
| | | | JP | 7209143 A | 11-08-1995 |